# EUROPEAN PATENT SPECIFICATION

(11) **EP 2 279 114 B1**
(45) Date of publication and mention of the grant of the patent: **28.08.2019**
(21) Application number: 09733113.6
(22) Date of filing: 20.04.2009
(51) Int. Cl.: B63H 23/32, B63H 5/07, B63H 5/125, F16C 17/04, F16C 19/00, F16C 21/00, H02K 7/08, H02K 7/14, H02K 5/124, F16C 17/24

(54) **PROPULSION AND BEARING ARRANGEMENT FOR A SHIP AND BEARING ARRANGEMENT**
ANTRIEBS- UND LAGERANORDNUNG FÜR EIN SCHIFF UND LAGERANORDNUNG
DISPOSITIF DE PROPULSION ET DE ROULEMENT POUR UN BATEAU ET DISPOSITIF DE ROULEMENT

(30) Priority: 18.04.2008 FI 20080294
(43) Date of publication of application: 02.02.2011
(73) Proprietor: ABB Oy, 00380 Helsinki (FI)
(72) Inventor: PALOKANGAS, Sami, FI-01900 Nurmijärvi (FI)
(86) International application number: PCT/FI2009/000050
(87) International publication number: WO 2009/127774

(56) References cited:
- EP-A1- 1 010 614
- DE-A1- 3 821 661
- DE-A1- 19 648 417
- US-A- 1 865 842
- US-A- 1 865 842
- US-A- 1 987 937

## Description

In traditional propeller shaft bearings of ships, slide bearings have almost always been used both in the radial and the axial direction. The reason for this is that a correctly measured slide bearing is very reliable when the rotating speed is sufficient and steady. It is also possible to manufacture slide bearings with an easier splitting property, which enables its replaceability. In cases in which it is typical for the ship in question that the shaft also rotates with low rotation speeds, the slide bearings of the radial direction are typically equipped with separate hydrostatic pumping units, which enable also running with low speed.

In ships' electrical reversible propeller units the propeller shaft is supported by bearings onto the frame of the reversible propeller. The bearings are fitted to both sides of the rotor of the electric motor using the propeller. The bearing bodies and the stator of the electric motor are attached to the housing of the reversible propeller, which is supported against the ship's hull such that it can be reversed. The housing of the reversible propellers is fully surrounded by water under the ship's hull. The operating force to rotate the propeller is conducted electronically from the electric network fed by a generator inside the ship. One such electronically operated reversible propeller installation is known with the name Azipod®, which is a trademark registered by ABB Oy.

Rolling bearings are typically used in mechanical thrusters, as well as in electric rudder-propellers. This is due to several reasons. The available space is very limited, and rolling bearings offer a space-efficient solution. Low rotating speeds are used in rudder propeller devices, which would require a hydrostatics unit for the radial slide bearing arrangement. In addition, to make the use of space more efficient, the rolling bearings of the axial direction and radial direction are connected to the same bearing housing in either end of the propeller device. In this case the same type of bearings are used in one lubrication system.

In a reversible propeller installation, forces with different directions are directed to the bearings supporting the shaft, and the forces require corresponding support. In reversible propeller installations the support of radial and axial forces is executed with pressure bearings such as pressurised roller bearings or pressurised tapered bearings which are designed to receive normal radial forces as well as axial forces. Radial and axial forces can also be borne by separate rolling bearings. As mentioned above, relatively short shaft line lengths and very limited amounts of space are typical for reversible propeller installations.

Bearings are parts that wear and require maintenance. The renewal of bearings in a reversible propeller installation always requires the ship to be docked, which is an expensive and time-consuming operation. The wear of bearings may also cause decreased efficiency in the propulsion unit before the renewal of bearings is necessary. The result may be, for example, that in an electric motor the air gap between the stator and the rotor changes.

Publication EP1010614A1 discloses a propeller arrangement where propeller shaft is rotated with an electric motor. The shaft is supported with a bearing between the rotor of the motor and the propeller and with another bearing locating on the opposite side of the rotor.

Publication DE19648417A1 discloses a propeller arrangement where propeller shaft is rotated with an electric motor. Two propellers are mounted to the opposite ends of the propeller shaft. The electric motor locates between the propellers. The bearings supporting the propeller shaft are installed between the rotor and the propeller on each side of the rotor.

The purpose of the invention is to develop a new ship propulsion arrangement and bearing arrangement in which the forces between the shaft and the frame of a reversible propeller installation are controllable and whose maintenance is simple and effortless. In order to achieve this, the ship propulsion arrangement according to the invention is characterised by the features specified in the characteristics section of Claim 1. Certain other preferred embodiments of the invention are characterised by the features defined in the dependent claims.

The solution according to the invention achieves better reliability and makes maintenance easier. In addition, the condition monitoring of the pressurised bearing unit improves significantly.

The requirements of high-power reversible propeller units can be better fulfilled. In the solution there are no closely-spaced bearing rings which could touch or rub against each other even if the forces directed to the shaft and bearings would increase. In a reversed propeller installation the radial forces of the shaft line vary in different operation and loading situations in all directions, and thus, the bearing clearances are used in all directions up to the extreme positions. There are especially great effecting forces in CRP drives (CRP = contra rotating propellers), in which the reversible propeller unit is close to the fixed shaft. In the solution according to the invention, all parts in the bearings which are close to each other and are moving in relation to each other are well lubricated and protected.

In the solution according to the invention, radial and axial forces are separated from each other, in which case they can be designed and dimensioned separately in accordance with the requirements of each execution. Roller bearing technology is highly developed and in many demanding applications it has proved its practicability, reliability and functionality. When the axial forces are separated into an entity of its own that can be separately serviced, inspected and, when necessary, changed without dry docking, the maintenance and serviceability of the propulsion unit become easier. At the same time, the propulsion unit's effective operation time and efficiency will increase.

In one embodiment of the invention the housings of the rolling bearing and slide bearing are separated from each other. Bearings of different types typically have different lubrication requirements, oil types, cleanliness requirements and additives. Slide bearings are sensitive to hard particles which may become detached from rolling bearings. On the other hand, rolling bearings require a high cleanliness level, and soft white metal may be detached from slide bearings as waste due to wear. When the slide bearing and the rolling bearing are separated from each other by seals, the lubrication spaces are separate. In a beneficial way, the axial slide bearing and the rolling bearing of radial direction have been connected to a common lubrication system where the seal keeps the possible wear products of the bearings on their own sides.

According to a beneficial embodiment of the invention, the axial position of the propeller shaft is monitored by measurement, which makes it possible to observe the condition and wear of the slide surface in the pressurised bearing. It is thus possible to notice the need for maintenance or replacement in good time, once an allowed limit value is reached.

According to a beneficial application method, acceleration and/or acoustic measurement sensors can be placed directly onto the outer rings of the roller bearing because the outer rings of both roller bearings are fixed. Thereby, possible faults in the roller bearings can be noticed much earlier than before the application of the invention.

Furthermore, according to one application method, temperature sensors are installed in the connection of the slide bearing. It is typical for the bearing type that the temperature of the slide surface will rise significantly if the state of lubrication is not sufficient. Therefore, it is easy to monitor the operating conditions of slide bearings with temperature sensors. In this case the problem in the axial bearing can be fixed before more serious damage occurs.

The invention is described below in detail with the help of one of its embodiments. References are made to drawings in which
- Figure 1 illustrates a ship's propulsion arrangement according to the invention,
- Figure 2 illustrates a bearing arrangement according to the invention,
- Figure 3 illustrates another ship's propulsion arrangement according to the invention, and
- Figure 4 illustrates a lubrication system in a bearing arrangement in accordance with the invention.

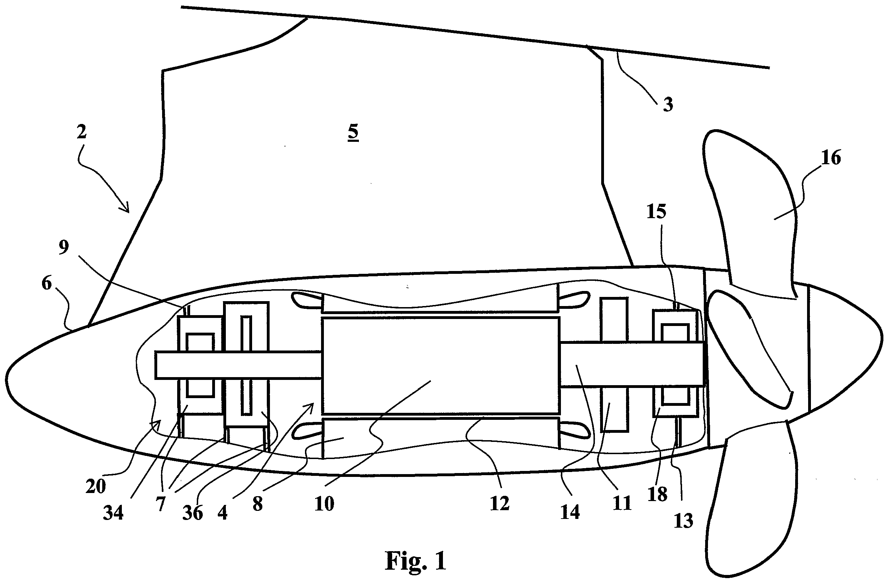

Figure 1 includes a partial cross-section of the reversible propeller unit, illustrating a solution embodiment according to the invention. 2, which has been connected to the ship's hull 3 in a way that it can be reversed. The reversible propeller unit 2 includes the swinging arm 5 and, under it, the pod-like housing 6 to which the electric motor 4 has been attached, and in whose other end the propeller 16 locates. The electric motor 4, which in this embodiment is a synchronous motor directed by a frequency converter, includes the stator 8 and the rotor 10 inside it in a way that there is an air gap 12 between the stator and the rotor using a known method. Without affecting the execution of the presented invention, the electric motor can also be executed otherwise, for example, as an induction motor or as a synchronous permanently magnetised motor. The rotor 10 has been fitted onto the shaft 14 which is supported at the propeller 16 end by the first bearing 18 onto the frame of the housing 6 with support devices 13 and 15. The other end of shaft 14, opposite to the propeller 16, is supported on the frame of housing 6 by another bearing unit 20 which includes radial bearing 34 and bearing 36 supporting the shaft in the axial direction. The bearing unit 20 is supported on the frame of the housing by the support devices 7 and 9. The magnetising equipment 11 of electric motor 4 has been fitted in the immediate vicinity of the electric motor.

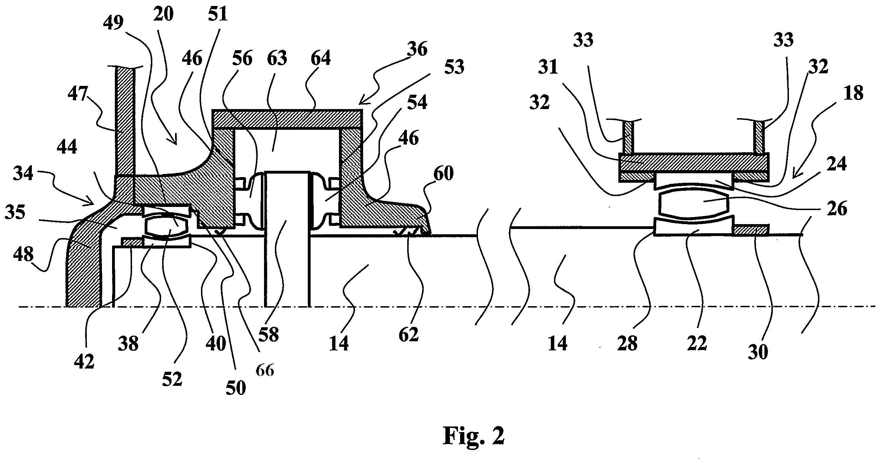

Figure 2 includes only both heads of the propeller shaft in the place of bearing 18 and, correspondingly, in the place of bearing assembly 20, and it illustrates in more detail a bearing arrangement according to the invention. Only the upper half of the bearings and the shaft has been presented in Figure 2. However, it must be understood that the lower part is not fully identical. Instead, especially the bearing supporting and the place where the lid is located on the bearing body may vary. The bearing 18 at the end of propeller 16 is a radial bearing that has been executed with a rolling or roller bearing whose inner rolling surface 22 has been fitted for the shaft 14 and whose outer rolling surface 24 has been attached to the reversed propeller unit's frame 6. The roller bearing's rolls 26 are arranged in a known method between the rolling surfaces 22 and 24. The shaft 14 is supported by the rolls on the frame 6 in the radial direction. In the axial direction, the rolling surface 22 of bearing 18 is supported on the rotor side to the shoulder 28 of the shaft 14 and on the propeller side to the ring 30. Correspondingly, the rolling surface 24 is supported in the axial direction with shoulders 32 attached to the support element 31. The support element 31 is further supported with flanges 33 onto the frame of the housing 6.

The bearing assembly 20 in the opposite end of the propeller is formed of two separate bearings, a rolling or roller bearing 34, which is fitted to the first bearing housing 35, and the bearing 36, dimensioned to support heavy axial loading, which supports the shaft in the axial direction. The bearing 36 supporting the shaft in the axial direction is fitted to the other bearing housing 63. The inner rolling surface 38 of the roller bearing 34 is fitted on the shaft and locked in the axial direction between the shaft's shoulder 40 and the retaining ring 42. The inner rolling surface can be attached to the shaft also with some other method than presented here, for example, with a conical sleeve. The outer rolling surface 44 of the roller bearing 34 is supported in the radial direction on the support surface 49 formed in the bearing body 46, and in the axial direction on the end shield 48, on the frame of housing 6 through the fitted support flange or beam 47, and on the shoulder 50 in the bearing body 46. The rolls 52 of the roller bearing 34 fit to the rolling surfaces 38 and 44 and form a support in the direction of the shaft's radius. The pressure bearing of bearing assembly 20 is executed as a slide bearing in which the sliding pieces 54 and 56 have been attached to the frame part 46. The sliding pieces are attached to the frame part's support surfaces 51 and 53. On both sides of the supporting surface, the sliding bearing has several sliding pieces 54 and 56 which are installed in a ring formation onto the support surfaces 51 and 53. The rolling and slide bearings create an efficiently integrated entity which has a common frame part. The frame part may also comprise several firmly connected parts which create an efficient integrated entity. On the shaft 14, there is a radially protruding support shoulder 58 which has been placed between the sliding piece 54 located closer to the rotor side and the outer sliding piece 56. The rotor-side head 60 of the bearing body 46 extends substantially close to the shaft, and, thus, the gasket 62 has been installed between the shaft 14 and the head of the bearing body 60. The sliding pieces 54 and 56 are attached to the bearing body 46. If the roller bearing 34 and pressurised bearing 36 are to be lubricated separately, a gasket 66 has been fitted between them, between the bearing body 46 and the shaft 14.

The bearing body 46 comprises an openable lid 64 through which the bearing's sliding pieces can be serviced and changed one sliding piece at a time without the need to detach the reversible propeller unit or to dock the ship in a dry dock. Measurement instruments may have also been installed in the connection of the bearing. The instruments can be used to measure axial movement of the shaft and the wear of the bearing.

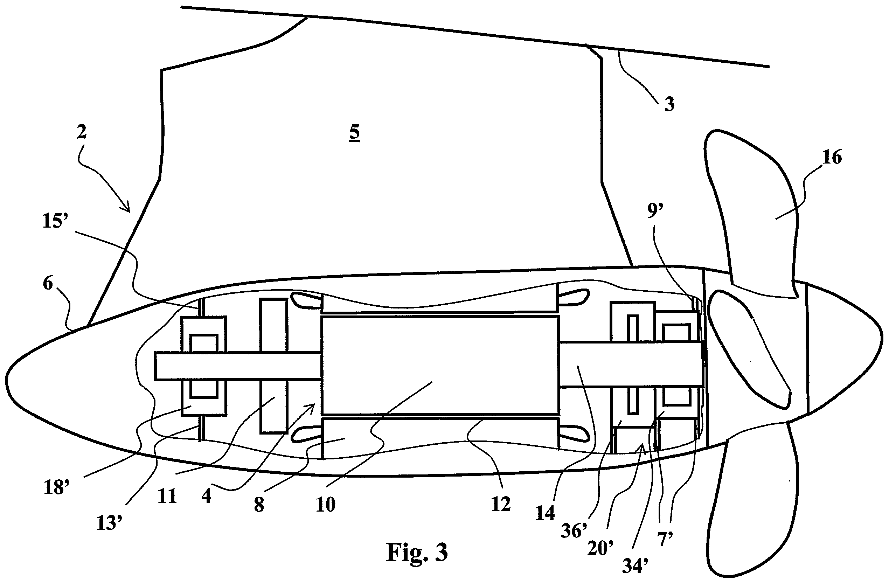

Figure 3 illustrates another propulsion arrangement according to the invention, in which the frame structure of the reversible propeller unit 2, the propeller 16 and the electric motor 8 fitted to the propeller shaft correspond to the structure described in Figure 1. The same reference numbers have been used for the same parts both in Figure 1 and Figure 3. The roller bearing 18' is fitted to the end of propeller shaft 14 opposite to the propeller 16. The roller bearing 18' has been supported on the housing 6 through support devices 13' and 15'. The other bearing assembly 20' includes the radial bearing 34' and the bearing 36' that supports the shaft in the axial direction and is installed between the synchronous motor 4 and the propeller 16, and is moreover supported on the frame 6 through the support devices 7' and 9'. The other bearing 20' requires more space in the axial direction, and, therefore, the magnetising machine 11 of the synchronous motor 4 is installed on the same side of the synchronous motor 4 as the roller bearing 18' to make the synchronous motor 4 and its support to settle as centrally as possible on the housing 6 of the reversible propeller unit.

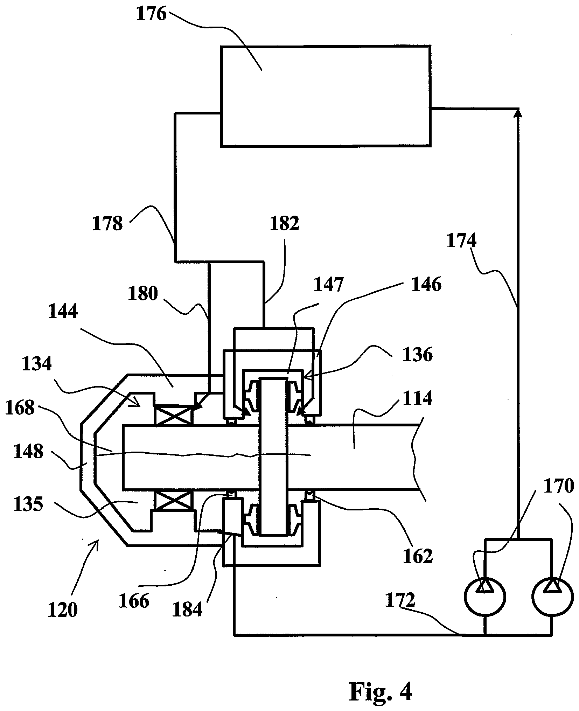

Figure 4 is a schematic illustration of a bearing arrangement lubrication system according to the invention. The lubrication system is arranged to lubricate both the bearing giving support in the axial direction and the lubrication of the thereto connected radial bearing. The bearing 120 consists of rolling bearing 134 and slide bearing 136 supporting the shaft longitudinally. The rolling bearing is supported on bearing body 144 and the slide bearing 136 is supported on bearing body 146. The bearing bodies 144 and 146 are connected to each other or they form an integrated entity. The bearing body 144 forms the bearing housing 135 of the rolling bearing 134. The housing is closed by the end shield 148 at one end and by the gasket 166 fitted against the shaft 114 at the other end. The bearing housing 135 is a closed oil chamber to which lubrication oil can be fed individually. Correspondingly, the bearing body 146 of the slide bearing forms the bearing housing 147 that is closed at one end by the gasket 166 and, similarly, by the gasket 162 fitted against the shaft 114 at the other end. The bearing housing 147 of the slide bearing is similarly a closed oil chamber that has been separated from the closed oil chamber of the rolling bearing with gasket 166. The rolling bearing 134 and the slide bearing 136 form an integrated entity in which the wall between the bearings' oil chambers 135 and 147 is a common part. In the oil chambers the lubrication oil level 168 is in the middle of the bearings 134 and, correspondingly, 136. The circulation, cooling and cleaning system of the lubrication oil includes the pumps 170 which are connected to the oil space of outlet pipe 172 and through pipe 174 to the oil monitoring and handling unit 176, from which oil is directed back to the bearings' oil chambers by pipes 178, 180 and 182. Lubrication oil is filtered and cooled in the monitoring and handling unit 176. In addition, the unit includes the monitoring of the lubrication oil level and the control of the pumps. The pipework 178 branches to the pipe 180 leading to the rolling bearing 134 and to the pipe 182 leading to the slide bearing 136. In the bottom of the bearings' oil chambers there is a connection pipe 184 from which lubrication oil is pumped through the outlet pipe 172. Even though the bearing's oil chambers 135 and 147 are independent and separated by gasket 166, advantageously, the same lubrication oil is used in this embodiment, and the gasket 166 does not need to be fully oilproof.

Measurement and monitoring devices have been arranged in the connection of the lubrication system to be able to measure the bearing's temperature and the level of lubrication oil. In addition, it is possible to install sensors in the connection of bearings to make it possible to notice axial movement, as well as vibration and oscillation sensors which can detect, for example, changes caused by wear.

Figure 4 includes a lubrication system which suits use with the bearing arrangement according to the invention. Case-specifically, it is also possible to execute the lubrication system with other means in which the circulation pumps and pipes for the lubrication substance are fitted according to the requirements and needs of the application. For example, the lubrication requirement and space available for each bearing must be taken into consideration.

In the above the invention has been described with the help of a certain embodiment. However, the description should not be considered as limiting the scope of patent protection; the embodiments of the invention may vary within the scope of the following claims.

## Claims

1. A ship's propulsion arrangement, which comprises a propulsion unit (2) which is supported in a reversible manner to a ship's hull (3), wherein an electric motor (4) driving the ship's propeller (16) is fitted inside a housing (6) of the propulsion unit, whereby the electric motor's rotor (10) is attached on a propeller shaft (14) and the propeller shaft (14) is supported onto a propulsion unit's housing (6) with a first bearing (18,34') between the rotor's first end and the propeller and with a second bearing (34,18') between the rotor's second end and a shaft end opposite to the propeller, whereby the first and the second bearing are executed by radial bearings, and at least one bearing (36,36') supporting the shaft in an axial direction is fitted on the propeller shaft (14) in the connection of the first (34') or the second (34) bearing, whereby the first and the second bearing (18,34) are rolling bearings, **characterised in that** the bearing (36) supporting in the axial direction is a slide bearing (36) comprising slide pieces (56) which are supported against a bearing body (46) and stop faces (58) perpendicular to the propeller shaft (14), which stop faces comprise a radially protruding support shoulder (58) on the shaft, and the bearing (36,36') supporting the shaft axially and the first or second bearing (34,34') fitted in its connection are integrated, and the first bearing (36) has support surfaces (51,53) against axial forces and the radial bearing (34) has support surfaces (49) against radial forces.

2. A propulsion arrangement according to claim 1, **characterised in that** the bearing (36) supporting the shaft in the axial direction is on the opposite side of the rotor (10) to the propeller (16).

3. A propulsion arrangement according to Claim 1, **characterised in that** the bearing (36,36') supporting the shaft axially, and the first or second bearing (34,34') fitted in its connection, are fitted within the same bearing body.

4. A propulsion arrangement according to any of the Claims from 1 to 3, **characterised in that** the bearing (136) supporting the shaft axially and the first or second bearing (134) fitted in its connection are connected to a common lubrication system.

5. A propulsion arrangement according to the Claims from 1 to 4, **characterised in that** the bearing (36,36',136) supporting the shaft axially, and the first or second bearing (34,34',134) fitted in its connection, are separated from each other with a gasket (66 ,166).

6. A propulsion arrangement according to the Claims from 1 to 5, **characterised** that the axial bearing (36,36',136) and the radial bearing (34,34',134) fitted in its connection are separated from each other with a gasket (66 ,166).

## Patentansprüche

1. Antriebsanordnung eines Schiffs, die eine Antriebseinheit (2) umfasst, die auf eine umkehrbare Art an dem Rumpf (3) eines Schiffs gestützt ist, wobei ein Elektromotor (4), der die Schraube (16) des Schiffs antreibt, in ein Gehäuse (6) der Antriebseinheit gepasst ist, wobei der Rotor (10) des Elektromotors an einer Schraubenwelle (14) angebracht ist und die Schraubenwelle (14) auf einem Gehäuse (6) der Antriebseinheit gestützt ist, mit einem ersten Lager (18, 34') zwischen dem ersten Ende des Rotors und dem Propeller, und mit einem zweiten Lager (34, 18') zwischen dem zweiten Ende des Rotors und einem Wellenende, das der Schraube entgegengesetzt ist, wobei das erste und das zweite Lager durch Radiallager ausgeführt sind, und mindestens ein Lager (36, 36'), das die Welle in eine axiale Richtung stützt, auf die Schraubenwelle (14) in der Verbindung des ersten (34') oder zweiten (34) Lagers gepasst ist, wobei das erste und das zweite Lager (18, 34) Wälzlager sind, **dadurch gekennzeichnet, dass** das Lager (36), das in die axiale Richtung stützt, ein Gleitlager (36) ist, das Gleitteile (56) umfasst, die gegen einen Lagerkörper (46) gestützt sind, und Anschlagflächen (58) senkrecht zu der Schraubenwelle (14), wobei die Anschlagflächen eine radial vorragende Stützschulter (58) auf der Welle umfassen, und das Lager (36, 36'), das die Welle axial stützt, und das erste oder das zweite Lager (34, 34'), das in seine Verbindung gepasst ist, integriert sind, und das erste Lager (36) Stützoberflächen (51, 53) gegen axiale Kräfte aufweist, und das Radiallager (34) Stützoberflächen (49) gegen radiale Kräfte aufweist.

2. Antriebsanordnung nach Anspruch 1, **dadurch gekennzeichnet, dass** das Lager (36), das die Welle in die axiale Richtung stützt, auf der entgegengesetzten Seite des Rotors (10) zu der Schraube (16) liegt.

3. Antriebsanordnung nach Anspruch 1, **dadurch gekennzeichnet,** das das Lager (36, 36'), das die Welle axial stützt, und das erste oder zweite Lager (34, 34'), das in seine Verbindung gepasst ist, in denselben Lagerkörper gepasst sind.

4. Antriebsanordnung nach einem der Ansprüche 1 bis 3, **dadurch gekennzeichnet, dass** das Lager (136), das die Welle axial stützt, und das erste oder zweite Lager (134), das in seine Verbindung gepasst ist, mit einem gemeinsamen Schmiersystem verbunden sind.

5. Antriebsanordnung nach den Ansprüchen 1 bis 4, **dadurch gekennzeichnet, dass** das Lager (36, 36', 136), das die Welle axial stützt und das erste oder zweite Lager (34, 34', 134), das in seine Verbindung gepasst ist, voneinander mit einer Dichtung (66, 166) getrennt sind.

6. Antriebsanordnung nach den Ansprüchen 1 bis 5, **dadurch gekennzeichnet, dass** das axiale Lager (36, 36', 136) und das Radiallager (34, 34', 134), das in seine Verbindung gepasst ist, voneinander mit einer Dichtung (66, 166) getrennt sind.

## Revendications

1. Un dispositif de propulsion de bateau qui comprend un système de propulsion (2), qui est fixé de manière réversible à la coque du bateau (3), dans laquelle un moteur électrique (4) actionnant le propulseur du bateau (16) est installé à l'intérieur d'un logement (6) du système de propulsion, dans lequel le rotor du moteur électrique (1) est fixé sur un arbre à hélice (14) et ledit arbre à hélice (14) est fixé sur le carter d'un système de propulsion (16) avec un premier roulement (18,34') placé entre la première extrémité du rotor et le propulseur et avec un deuxième roulement (34,18') entre la deuxième extrémité du rotor et l'extrémité de l'arbre à l'opposé du propulseur, où le premier et le second roulements sont du type radial, et au moins un roulement (36,36') fixant l'arbre dans le sens axial est posé sur l'arbre à hélice (14) dans le raccord du premier (34') ou du second roulement (34), dans lequel le premier et le second roulements (18,34) sont des roulements à billes, **caractérisé en ce que** le roulement (36) supportant dans le sens axial est une rotule lisse (36) comprenant des pièces lisses (56) qui sont fixées contre un corps de palier (46) et des butées (58) perpendiculaires à l'arbre à hélice (14), lesquelles butées comprennent un épaulement d'appui qui dépasse de l'axe (58) sur l'arbre, et le roulement (36,36') fixant l'arbre dans le sens axial et le premier ou le second roulement (34,34') placé dans son raccord sont intégrés, et le premier roulement (36) possède des surfaces d'appui (51,53) contre les forces axiales et le roulement radial (34) possède des surfaces d'appui (490 contre des forces radiales.

2. Un dispositif de propulsion selon la revendication 1, **caractérisé en ce que** le roulement (36) fixant l'arbre dans le sens axial se trouve sur le côté opposé du rotor (10) par rapport au propulseur (16).

3. Un dispositif de propulsion selon la revendication 1, **caractérisé en ce que** le roulement (36,36') qui fixe l'arbre sur un axe, et le premier ou le second roulement (34,34') placé dans son raccord sont installés dans le même corps de palier.

4. Un dispositif de propulsion selon les revendications 1 à 3, **caractérisé en ce que** le roulement (136) qui fixe l'arbre sur un axe, et le premier ou le second roulement (134) placé dans son raccord sont raccordés à un système de graissage commun.

5. Un dispositif de propulsion selon les revendications 1 à 4, **caractérisé en ce que** le roulement (36,36', 136) qui fixe l'arbre sur un axe, et le premier ou le second roulement (34,34', 134) placé dans son raccord sont séparés l'un de l'autre par un joint (66,166).

6. Un dispositif de propulsion selon les revendications 1 à 5, **caractérisé par le fait que** le roulement axial (36,36', 136) et le roulement radial (34,34', 134) placé dans son raccord, sont séparés l'un de l'autre par un joint (66,166).
